# EUROPEAN PATENT SPECIFICATION

(11) **EP 2 416 126 B1**
(45) Date of publication and mention of the grant of the patent: **02.11.2016**
(21) Application number: 11171858.1
(22) Date of filing: 29.06.2011
(51) Int. Cl.: G01D 5/347

(54) **Absolute encoder**
Absolutkodierer
Codeur absolu

(30) Priority: 06.08.2010 JP 2010178073
(43) Date of publication of application: 08.02.2012
(73) Proprietor: Canon Kabushiki Kaisha, Tokyo 146-8501 (JP)
(72) Inventor: Ishizuka, Ko, Tokyo 146-8501 (JP)
(74) Representative: TBK

(56) References cited:
- WO-A1-2004/094957
- US-A- 5 563 408

## Description

### BACKGROUND OF THE INVENTION

### Field of the Invention

The present invention relates to an absolute encoder that measures a position (or angular position).

### Description of the Related Art

Conventionally, an incremental encoder and absolute encoder are used for measuring positions and angles. An incremental encoder records slits of given periods on a scale or disk, and calculates an absolute position by optically or magnetically reading movements of slits, and combining a reading result with an origin detection mechanism. Note that in recent years, since the incremental encoder has a high-resolution slit pitch of about 80 µm, and interpolates phase information within one count by about 10000 divisions using an electric divider, it has a very high resolution, and many products which have a resolution of 10 nm are available. Since the incremental encoder normally optically reads an average of a plurality of slits in place of reading slots one by one, pattern errors of slits themselves are canceled, resulting in high precision. However, since the incremental encoder cannot obtain absolute position information unless it detects an origin first, applications especially to machine tools and robot fields are limited.

On the other hand, an absolute encoder can instantly output absolute position information since it reads a binary pattern as an image using a light-receiving element array or an image sensor such as a CCD. Methods for recording a binary pattern include a so-called gray code method, which records a binary pattern on a plurality of tracks, and a method of recording a binary pattern as random number codes on one track. However, it becomes difficult for the gray code method to synchronize detection of pieces of information on different tracks due to mounting errors, and the resolution of the absolute encoder is not so high. Hence, a method of expressing binary codes "1" and "0" as, for example, large and small transmittances, large and small slit widths, or the presence/absence of slits or pits set at equal intervals, and recording these codes as a cyclic code pattern on one track has been proposed. In this case, the cyclic code pattern is a pattern in which "1" and "0" are randomly set on one circumference, and upon focusing attention on M neighboring patterns, there are absolutely no positions having the same arrangement on the entire circumference. Japanese Patent Laid-Open No. 60-89713 discloses an absolute encoder using M-sequence codes as one kind of cyclic codes. The absolute encoder described in Japanese Patent Laid-Open No. 60-89713 attempts to improve the resolution by interpolating positions of code switching parts (edge parts) by a light-receiving element array of high-resolution pixels using a method of modulating a ratio of transmissive and non-transmissive parts of an absolute code pattern.

Japanese Patent Laid-Open No. 2004-529344 discloses an absolute encoder which uses absolute codes defined by partially removing reflecting slits that are periodically arranged at equal intervals. The absolute encoder described in Japanese Patent Laid-Open No. 2004-529344 measures an absolute position by making pattern matching (correlation calculations) between actual image information obtained by capturing an image of a scale that records the absolute codes by a light-receiving element array, and reference table data which is calculated in advance.

However, with these methods, the resolution of the absolute encoder is limited by that of elements of an optical system and the light-receiving element array. That is, when the slit periods are set to be too small, the waveform of a density pattern projected onto light-receiving elements tends to be distorted due to allowable mounting errors between the scale and light-receiving elements, and detection by pattern matching with the reference table data is often difficult. With these methods, slits which suffer drawing errors are read as an image, but since a ratio of "1"s and "0"s are not constant, most of slits are often read as "0" or "1". In such case, high resolution due to an averaging effect cannot be expected. That is, since the pattern matching precision depends on the arrangement state of absolute codes, the absolute encoder cannot be used in applications that require higher precision.

As described above, it is demanded to realize an absolute encoder having higher precision and higher resolution. Especially, it is demanded to realize an absolute encoder which can assure high precision and high resolution independently of portions to be detected on codes.

Document WO 2004/094957 A1 discloses an absolute position encoding apparatus comprising a scale element including code tracks and an array sensor for imaging the code tracks and a controller.

Document US 5 563 408 A discloses an absolute encoder having a coder in which an incremental pattern and an absolute pattern are arranged in parallel and a detector including sensors for detecting the incremental pattern and the absolute pattern respectively.

### SUMMARY OF THE INVENTION

The present invention provides an absolute encoder advantageous in terms of a position detection precision.

The present invention provides an absolute encoder as specified in claims 1 to 13 and a method as specified in claim 14.

Further features of the present invention will become apparent from the following description of exemplary embodiments with reference to the attached drawings.

### BRIEF DESCRIPTION OF THE DRAWINGS

Fig. 1A is a view for explaining the arrangement of a head unit of a transmissive slit type encoder according to the first embodiment;
Fig. 1B is a diagram for explaining the sequence of a calculator of the transmissive slit type encoder according to the first embodiment;
Fig. 2 is a view for explaining the arrangement of a head unit of a transmissive slit type encoder according to the second embodiment; and
Fig. 3 is a perspective view of a transmissive slit type encoder according to the third embodiment.

### DESCRIPTION OF THE EMBODIMENTS

### [First Embodiment]

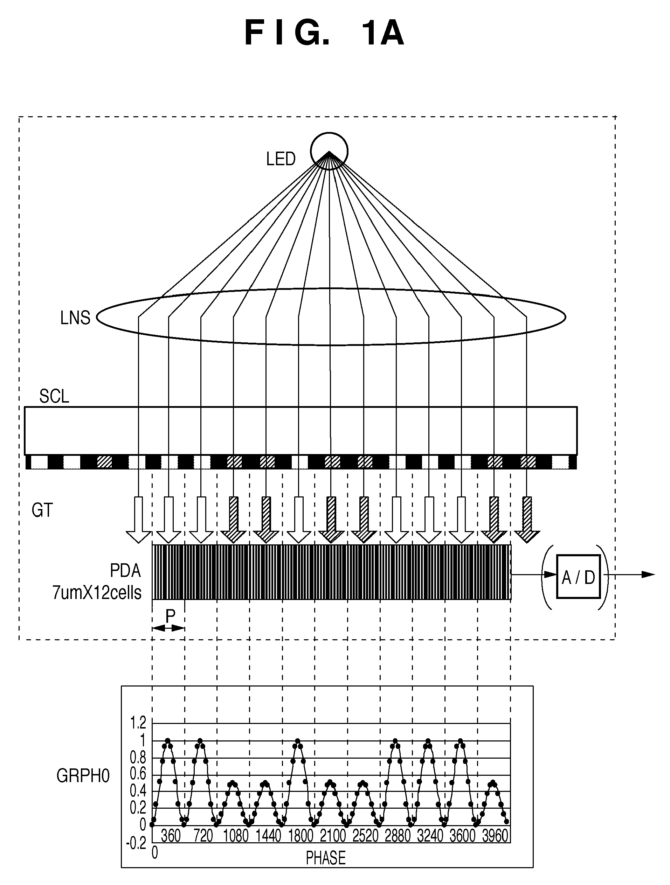

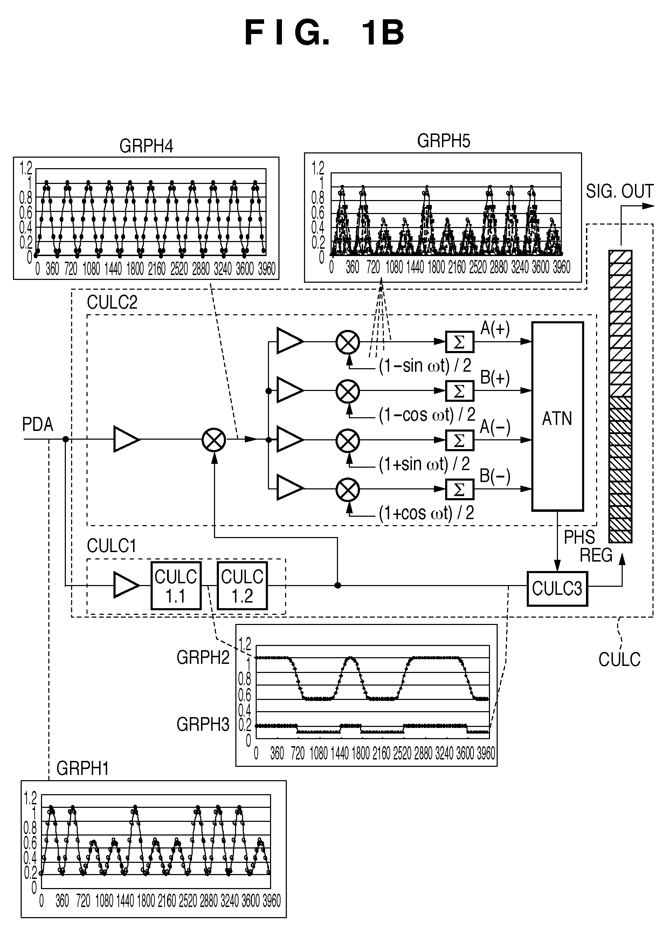

An absolute encoder according to the first embodiment of the present invention will be described below with reference to Figs. 1A and 1B. Fig. 1A is used to explain the arrangement of a head unit of a transmissive slit type encoder. Fig. 1B is used to explain the sequence of signal processing in a calculator of that encoder. As shown in Fig. 1A, a diverging light beam output from a point light source such as an LED is converted into parallel light by a collimator lens LNS. The parallel light illuminates a scale SCL, which is formed on a relatively moving disk DSK and is embedded with M-bit absolute codes. On the scale SCL, a plurality of marks including at least two different types of marks are arranged at given periods in one direction (first direction). In the first embodiment, slits GT including transmissive, semi-transmissive, and non-transmissive slits are formed on the scale SCL. In the slits GT, the non-transmissive slits are arranged at equal intervals, and transmissive or semi-transmissive slits are arranged between neighboring non-transmissive slits. The semi-transmissive slits can be realized by additionally forming a semi-transmissive thin film on the transmissive slits. Two types of slits, that is, the semi-transmissive and transmissive slits configure two types of marks, and a plurality of two types of slits are arranged to form the M-bit absolute codes. In the first embodiment, the two types of marks have the same shape but different transmittances. In addition, each of the two types of marks has a uniform transmittance in the mark. In the first embodiment, the number M of bits of the absolute codes is M = 11.

Light which is transmitted through the marks formed by the semi-transmissive and transmissive slits of the scale SCL is received by a detector (light-receiving element array) PDA. The light-receiving element array PDA detects an array of a predetermined number of (11) marks by a plurality of photoelectric conversion elements arranged along the same direction as the arrangement direction of the marks at pitches smaller than the mark periods. The light-receiving element array PDA is configured to arrange N photoelectric conversion elements in correspondence with one mark, and to shift phases output from the respective photoelectric conversion elements by equal intervals. In the first embodiment, the number N of divisions of a signal of one mark is N = 12, and the number of channels of the light-receiving element array PDA is N × M = 132. In this way, periodic signals SIG of 11 periods can always be obtained by 132 channels of the light-receiving element array PDA. As the absolute codes, M-sequence codes including a transmissive part = "1" and a semi-transmissive part = "0" or other cyclic codes generated by a primitive polynomial can be used.

The M-sequence codes are one kind of cyclic code patterns in which "1" and "0" are randomly set, and upon focusing attention on a plurality of neighboring patterns, there are no positions having the same arrangement, and correspond to a pattern having a longest period. A density distribution of incident light on the light-receiving element array PDA is expressed by GRPH0. A signal waveform obtained when a plurality of signals from the light-receiving element array PDA are temporarily stored in a register REG, and are then serially transferred to have clock signals as triggers is also expressed by GRPH1 in Fig. 1B. The waveform GRPH1 is the same as GRPH0 which expresses a light amount distribution of light which enters the light-receiving element array PDA. In an analog signal state, the waveform shown in Figs. 1A and 1B can be directly observed. In a digital signal state after A/D conversion, a virtual waveform is obtained as changes of digital values. However, these waveforms are technically the same. The waveform GRPH0 in Fig. 1A is expressed as a waveform obtained by modulating the amplitudes of a sine waveform by the absolute codes. However, an actual waveform GRPH0 may become a triangular wave or have a trapezoidal shape due to variations of intervals between the scale SCL and the light-receiving element array PDA, and is obtained by distorting a sine wave. However, in the following description, the influence of this distortion on precision can be removed. In the following description, the output waveform from the light-receiving element array PDA is handled as "waveform data" corresponding to the number of channels N × M = 132 of the light-receiving element array, and a calculator CULC (to be described below) converts "waveform data" in turn.

The calculator CULC calculates an absolute position of the scale SCL in the first direction with respect to the light-receiving element array PDA based on the serial transfer waveform GRPH1 output from the light-receiving element array PDA. The serial transfer waveform GRPH1 is processed by a first calculator CULC1 and second calculator CULC2 in the calculator CULC. The first calculator CULC1 generates a data sequence configured by 12 data by quantizing the amplitudes of 12 periodic signals output from the light-receiving element array PDA, and converts this data sequence into first position data to have the period as a unit. That is, the first calculator CULC1 calculates a sum total signal of the outputs of a central photoelectric conversion element and a predetermined number of (five) neighboring photoelectric conversion elements, and converts the serial transfer waveform GRPH1 into a waveform GRPH2. The first calculator CULC1 further quantizes (binarizes) the calculated sum total signal by comparing it with a reference value (intermediate intensity), thereby converting the waveform GRPH2 into a digital signal waveform GRPH3. This waveform GRPH3 defines tentative absolute codes (integer part). The first calculator CULC1 converts the tentative absolute codes into first position data having the mark period as a unit.

The second calculator CULC2 multiplies the serial transfer waveform GRPH1 from the light-receiving element array PDA by "1" when the tentative absolute code output from the first calculator CULC1 is "1" or by "2" when the code is "0". In this manner, the second calculator CULC2 generates an amplitude-normalized periodic signal in which the influence of the modulation of the amplitude of the absolute code is removed, as indicated by GRPH4. The second calculator CULC2 distributes the generated periodic signal into four signals, and then respectively multiplies the four signals by any of {(1-sinωt)/2}, {(1-cosωt)/2}, {(1+sinωt)/2}, and {1+cosωt)/2}, thereby generating a waveform GRPH5. The second calculator CULC2 makes arctangent calculations ATN (or table lookup based on divisions) using a difference signal between sum totals A(+) and A(-) of sine-multiplied signals, and a difference signal between sum totals B(+) and B(-) of cosine-multiplied signals. Then, the second calculator CULC2 can calculate a phase PHS of a so-called incremental encoder equivalent periodic signal. Note that ωt corresponds to a phase for moving the serial transfer waveform by one density period. This phase information is not influenced by any distortion in principle, since the periodicity of original periodic signals is guaranteed and the amplitudes are normalized, and since divisions of the sum total signals are made, even when the sine waveform itself output from the light-receiving element array PDA includes a distortion. For this reason, the phase information calculated by the second calculator CULC2 has very high precision, and allows a very larger number of divisions. Normally, this phase information can be divided into 1000 or more. The second calculator CULC2 calculates second position data, which has a resolution of a length of a section obtained by dividing the mark period and is shorter than the length of the period, from at least one phase information of the 12 amplitude-normalized periodic signals.

A third calculator CULC3 combines the first position data converted by the first calculator CULC1 and the second position data calculated by the second calculator CULC2, thereby generating data which represents an absolute position of the scale SCL. The third calculator CULC3 saves the generated data which represents the absolute position of the scale SCL in the register REG as a final code of the absolute encoder. The data stored in the register REG is serially output in response to a request. Since the number of elements of a signal (upper waveform GRPH2) generated based on the light-receiving element array PDA is as many as the number of signals N × M = 132 corresponding to the number of channels of the light-receiving element array PDA, when these elements are extracted and arranged every N = 12, they can be used intact as M-bit absolute codes of an integer part. The M-bit absolute codes may be output as cyclic codes intact or converted into normal binary codes to be output. The M-bit absolute codes are required to undergo processing for synchronizing switching timings using values of phase information PHS. For example, in order to generate absolute codes corresponding to an interpolated part based on the phase information PHS (a decimal part), the calculated phase value is quantized by K bits, and is then converted into a K-bit binary code. A serial signal obtained by coupling M-bit absolute codes M-CODE of the integer part and K-bit absolute codes K-CODE of the interpolated part as upper and lower bits is output, thereby realizing an absolute encoder.

Since the encoder with the aforementioned configuration calculates phase information by making calculations by averaging N sets of periodic signals by N marks, the phase information values interpolated by arctangent calculations have high precision equivalent to or higher than that of a conventional incremental encoder. In this embodiment, each switching part of the absolute codes uses phase information obtained by making calculations by averaging the N sets of periodic signals. For this reason, since switching parts of the absolute codes are specified without being influenced by drawing errors of partial mark edges, the absolute codes of the integer part also have very high precision.

### [Second Embodiment]

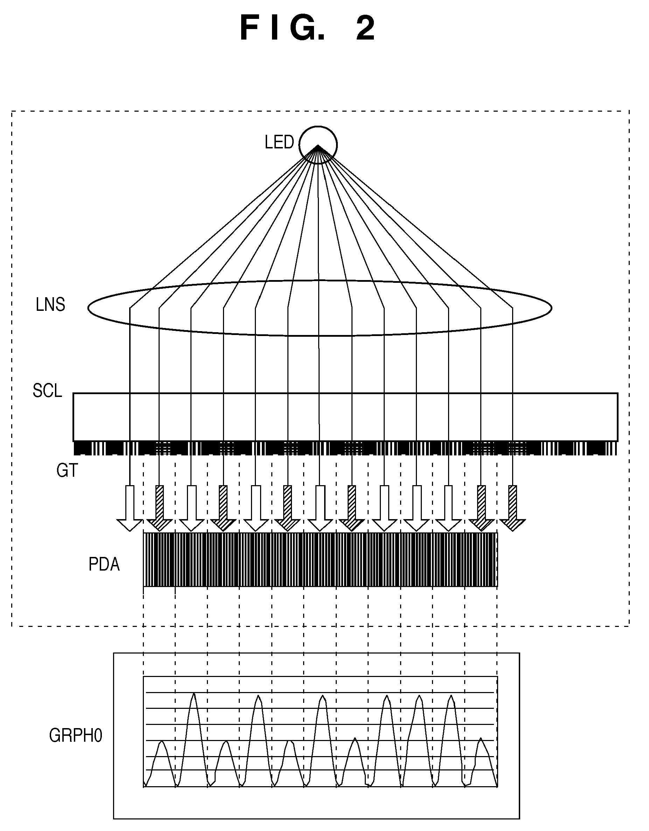

Fig. 2 shows an absolute encoder of the second embodiment. Each of the transmissive and semi-transmissive slits as the two types of marks of the first embodiment has a uniform transmittance in the mark. The second embodiment uses two types of marks, each of which has a transmittance that changes according to the position in the mark. That is, the second embodiment uses a pattern GT which is formed to continuously change a transmissive density, and records a pattern having a large maximal value of a transmittance and that having a small maximal value of a transmittance in correspondence with binary codes "1" and "0". Note that the continuous transmissive density change assignment method includes a method based on a change in configuration of a thin film, a method of continuously changing a transmissive light amount by forming a boundary part shape to have a curve in place of a line, and a method of adding a light-shielding portion by hatching.

### [Third Embodiment]

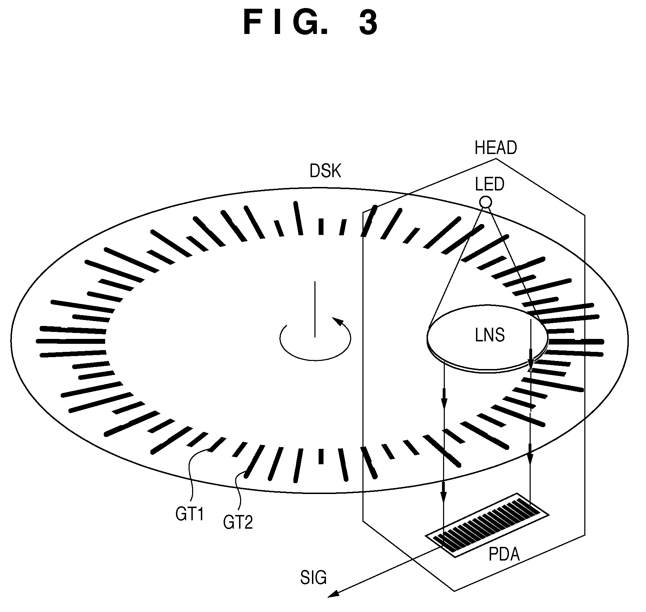

Fig. 3 shows an absolute rotary encoder according to the third embodiment. The first and second embodiments use, as the two types of marks, marks which have the same shape but different transmittances. The third embodiment uses two types of marks which have the same transmittance, but different lengths in a direction (second direction) perpendicular to a mark direction (first direction). On a disk DSK, long transmissive slits GT1 and short transmissive slits GT2 are recorded in correspondence with binary codes "1" and "0". A detection head HEAD is arranged with respect to a rotational axis of this disk DSK. The detection head HEAD converts a diverging light beam output from a point light source LED into parallel light by a collimator lens LNS, illuminates the transmissive slits GT1 and GT2 on the relatively rotating disk DSK with the parallel light, and receives light transmitted through these slits by a light-receiving element array PDA.

### [Other Embodiments]

The present invention is not limited to the configuration of the first embodiment, and various modifications and changes may be made within the scope of the invention. In the first embodiment, the transmissive and semi-transmissive slits are used as marks that configure absolute codes by arranging the non-transmissive slits at equal intervals, and arranging the transmissive or semi-transmissive slits between the neighboring non-transmissive slits. However, full-transmissive slits and non-transmissive or semi-transmissive slits may be used as marks that configure absolute codes by arranging the full-transmissive slits at equal intervals, and arranging the non-transmissive or semi-transmissive slits between neighboring full-transmissive slits. A light amount distribution in this case is obtained by vertically inverting the waveform GRPH0, and a binary processing unit and the like may be changed accordingly. Alternatively, cyclic codes which set a transmissive light amount and reflection light amount to be different values (for example, 100% and 70%) in place of two values of 100% and 50% or set three values or more (for example, four values of 100%, 75%, 50%, and 25%) may be used. In this case, information of 2 bits or more can be embedded per slit. When one density period is detected by 12 elements like in the first embodiment, a light projected pattern onto the light-receiving element array cannot often have a sine wave shape due to variations of intervals between the scale SCL and light-receiving element array PDA. However, when information of 2 bits or more can be embedded per slit, since harmonic distortion components of third order or higher can be effectively removed, high-precision phase calculations can be attained. However, one density period may be changed to, for example, three, four, six, or eight elements in consideration of the required precision and the availability of the light-receiving element array PDA.

In the first to third embodiments, the light-receiving element array PDA detects an array of marks by light transmitted through a plurality of marks. However, the light-receiving element array PDA may detect an array of marks by receiving light reflected by marks. In this case, a plurality of marks may include at least two types of marks which have the same shape but different reflectances or at least two types of marks which have the same reflectance but have different shapes.

The light-receiving element array PDA may include photoelectric conversion elements, the number of which is equal to or larger than the number of bits of absolute codes, and may fetch and calculate signals. In this case, a so-called "averaging effect of slits of an incremental encoder" of periodic signals is enhanced, thus obtaining still higher precision. Also, a method of reducing the influence of partial load errors by appropriate signal processing (increasing redundancy) can also be applied. In consideration of sensitivity variations of respective cells of the light-receiving element array PDA and light amount nonuniformity caused by an optical system, mathematical formulas or values used in calculations in the first embodiment may be changed. Alternatively, approximate values may be applied according to the required precision.

As the calculator which executes the signal processing shown in Fig. 1B, equivalent functions may be implemented by other algorithms or sequences. For example, a method of executing addition/subtraction/multiplication processing of signals from the light-receiving element array PDA using parallel analog circuits, a method of executing addition/subtraction/multiplication processing or filter processing of signals from the light-receiving element array PDA using serial analog circuits, and a method of immediately A/D-converting signals of the light-receiving signal array, and executing calculation processing of digital information using, for example, an FPGA may be used. In the first embodiment, an encoder optical system which directly transmits through parallel light is used. Alternatively, detection methods based on an enlarged illumination optical system using diverging light, a focusing optical system using a lens, and other optical systems may be used.

The absolute codes of the present invention can obtain the following effects.
1. The absolute encoder of the present invention simultaneously calculates absolute codes of an integer part and phase information of a decimal part from the single slit array and the single light-receiving element array. For this reason, the absolute encoder of the present invention suffers less detection errors, and can assure high stability and high reliability, since it does not generate any synchronization errors of phase information in principle compared to an absolute detection method of a plurality of tracks such as the gray code method.
2. The absolute encoder of the present invention calculates absolute codes and phase information from density distribution information of an entire light beam illuminated part unlike in a conventional edge-focused method of absolute codes. For this reason, the absolute encoder of the present invention is free from the influence of edge precision and unambiguity, and information of the integer part of the absolute codes has high precision. That is, the absolute encoder of the present invention is free from the influence of code pattern drawing errors of the absolute encoder.
3. The absolute encoder of the present invention assures high-speed responses since it makes calculations using electric circuits in place of determination/detection methods of integer part absolute codes by pattern matching using a DSP or CPU unlike in the conventional method.
4. The absolute encoder of the present invention can always make arctangent calculations using low-distortion bi-phase sine wave signals, since it calculates phase information by arctangent calculations of bi-phase signals based on light-receiving element array signals, even when a light-receiving element array projected light distribution suffers distortions or intensity nonuniformity. For this reason, the absolute encoder of the present invention can assure high resolution and high precision of decimal part information of the absolute codes. That is, the absolute encoder of the present invention suffers less so-called interpolation errors.
5. The absolute encoder of the present invention simultaneously calculates absolute codes of an integer part and phase information of a decimal part from the single slit array and the single light-receiving element array. For this reason, even when the intervals between the scale, light source, and light-receiving element array are changed to slightly change a density distribution pattern to be projected, the absolute encoder of the present invention can stably detect absolute codes and phase information, thus assuring high mounting properties.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An absolute encoder includes a scale (SCL) in which plural marks are arranged at a first pitch; a detector (PDA) configured to detect a predetermined number of marks corresponding to one of the absolute codes; and a calculator (CULC) configured to calculate an absolute position of the scale based on an output of the detector. The calculator is configured to generate a data sequence constituted by the predetermined number of data by respectively quantizing the predetermined number of periodic signals output from the detector, and to obtain first position data corresponding to the one of the absolute codes based on the generated data sequence, to obtain second position data based on a phase of at least one of the predetermined number of periodic signals, and to generate data which represents the absolute position by combining the first position data and the second position data.

## Claims

1. An absolute encoder comprising:
a scale (SCL) in which a plurality of marks, including a plurality of types of marks, are arranged in a track, with a space and at a period;
a detector (PDA) including a plurality of elements arranged along a direction corresponding to the track, and configured to detect marks of the plurality of marks by the plurality of elements; and
a signal processor (CULC) configured to obtain an absolute position of said scale based on an output of said detector,
wherein said signal processor is configured
to generate a data sequence constituted by a plurality of data by respectively quantizing a plurality of signals, respectively corresponding to a plurality of the period, output from said detector, and to obtain first position data with a resolution of the period based on the generated data sequence,
to obtain second position data with a resolution higher than the resolution of the period based on a phase of a signal, corresponding to at least one of the period, of the plurality of signals, and
to obtain the absolute position based on the first position data and the second position data.

2. The encoder according to claim 1, wherein the plurality of marks include at least two types of marks which have respective different transmittances, and the detector is configured to detect a light transmitted through the scale.

3. The encoder according to claim 2, wherein each of the at least two types of marks has a uniform transmittance therein.

4. The encoder according to claim 2, wherein each of the at least two types of marks has a transmittance which changes with a position therein.

5. The encoder according to claim 1, wherein the plurality of marks include at least two types of marks which have respective different reflectances, and the detector is configured to detect a light reflected by the scale.

6. The encoder according to claim 1, wherein the plurality of marks include at least two types of marks which have respective different lengths in a direction perpendicular to a direction in which the plurality of marks are arranged, and the detector is configured to detect a light transmitted through the scale.

7. The encoder according to claim 1, wherein the plurality of marks include at least two types of marks which have respective different lengths in a direction perpendicular to a direction in which the plurality of marks are arranged, and the detector is configured to detect a light reflected by the scale.

8. The encoder according to any one of claims 1 to 7, wherein said signal processor is configured to smooth the plurality of signals, and to quantize the smoothed plurality of signals to generate the data sequence.

9. The encoder according to any one of claims 1 to 8, wherein the said signal processor is configured to normalize amplitudes of the plurality of signals, and to obtain the phase based on the normalized plurality of signals.

10. The encoder according to claim 9, wherein the said signal processor is configured to normalize the amplitudes based on the generated data sequence.

11. The encoder according to any one of claims 1 to 10, wherein the signal processor is configured to obtain the absolute position by combining the first position data and the second position data respectively as upper bits and lower bits.

12. The encoder according to any one of claims 1 to 11, wherein the plurality of types of marks respectively correspond to a plurality of quantized values associated with the quantizing by the signal processor.

13. The encoder according to any one of claims 1 to 12, wherein the encoder is configured as a rotary encoder.

14. A method of obtaining an absolute position using a scale (SCL) in which a plurality of marks, including a plurality of types of marks, are arranged in a track, with a space and at a period, the method comprising steps of:
detecting marks of the plurality of marks by a plurality of elements of a detector (PDA) arranged along a direction corresponding to the track; and
obtaining an absolute position of said scale based on an output of said detector,
wherein said step of obtaining includes step of
generating a data sequence constituted by a plurality of data by respectively quantizing a plurality of signals, respectively corresponding to a plurality of the period, output from said detector, and to obtain first position data with a resolution of the period based on the generated data sequence,
obtaining second position data with a resolution higher than the resolution of the period based on a phase of a signal, corresponding to at least one of the period, of the plurality of signals, and
obtaining the absolute position based on the first position data and the second position data.

## Patentansprüche

1. Absolutkodierer, mit:
eine Skala (SCL), in der eine Vielzahl von Markierungen, die eine Vielzahl von Arten von Markierungen umfasst, in einer Spur angeordnet sind, mit einem Zwischenraum und bei einer Periode;
einem Detektor (PDA), der eine Vielzahl von Elementen umfasst, die entlang einer Richtung entsprechend der Spur angeordnet sind, und dazu konfiguriert ist, Markierungen der Vielzahl von Markierungen durch die Vielzahl von Elementen zu erfassen; und
einem Signalprozessor (CULC), der dazu konfiguriert ist, eine Absolutposition der Skala basierend auf einer Ausgabe des Detektors zu erhalten,
wobei der Signalprozessor dazu konfiguriert ist
eine Datensequenz, die durch eine Vielzahl von Daten gebildet ist, durch entsprechendes Quantisieren einer Vielzahl von Signalen, die entsprechend einer Vielzahl der Periode entsprechen, die von dem Detektor ausgegeben wird, zu erzeugen, und erste Positionsdaten mit einer Auflösung der Periode basierend auf der erzeugten Datensequenz zu erhalten,
zweite Positionsdaten mit einer Auflösung, die höher ist als die Auflösung der Periode, basierend auf einer Phase eines Signals, entsprechend zumindest einer der Periode der Vielzahl von Signalen zu erhalten, und
die Absolutposition basierend auf den ersten Positionsdaten und den zweiten Positionsdaten zu erhalten.

2. Kodierer gemäß Anspruch 1, wobei die Vielzahl von Markierungen zumindest zwei Arten von Markierungen umfasst, die entsprechend unterschiedliche Durchlässigkeiten aufweisen, und der Detektor dazu konfiguriert ist, ein durch die Skala übertragenes Licht zu erfassen.

3. Kodierer gemäß Anspruch 2, wobei jede der zumindest zwei Arten von Markierungen eine gleichförmige Durchlässigkeit aufweist.

4. Kodierer gemäß Anspruch 2, wobei jede der zumindest zwei Arten von Markierungen eine Durchlässigkeit aufweist, die sich mit einer Position ändert.

5. Kodierer gemäß Anspruch 1, wobei die Vielzahl von Markierungen zumindest zwei Arten von Markierungen umfasst, die entsprechend unterschiedliche Reflexionsgrade aufweisen, und der Detektor dazu konfiguriert ist, ein durch die Skala reflektiertes Licht zu erfassen.

6. Kodierer gemäß Anspruch 1, wobei die Vielzahl von Markierungen zumindest zwei Arten von Markierungen umfasst, die entsprechend unterschiedliche Längen in eine Richtung senkrecht zu einer Richtung, in die die Vielzahl von Markierungen angeordnet sind, aufweisen, und der Detektor dazu konfiguriert ist, ein durch die Skala übertragenes Licht zu erfassen.

7. Kodierer gemäß Anspruch 1, wobei die Vielzahl von Markierungen zumindest zwei Arten von Markierungen umfasst, die entsprechend unterschiedliche Längen in eine Richtung senkrecht zu einer Richtung, in die die Vielzahl von Markierungen angeordnet sind, aufweisen, und der Detektor dazu konfiguriert ist, ein durch die Skala reflektiertes Licht zu erfassen.

8. Kodierer gemäß einem der Ansprüche 1 bis 7, wobei der Signalprozessor dazu konfiguriert ist, die Vielzahl von Signalen zu glätten und die geglättete Vielzahl von Signalen zu quantisieren, um die Datensequenz zu erzeugen.

9. Kodierer gemäß einem der Ansprüche 1 bis 8, wobei der Signalprozessor dazu konfiguriert ist, Amplituden der Vielzahl von Signalen zu normieren und die Phase basierend auf der normierten Vielzahl von Signalen zu erhalten.

10. Kodierer gemäß Anspruch 9, wobei der Signalprozessor dazu konfiguriert ist, die Amplituden basierend auf der erzeugten Datensequenz zu normieren.

11. Kodierer gemäß einem der Ansprüche 1 bis 10, wobei der Signalprozessor dazu konfiguriert ist, die Absolutposition durch Kombinieren der ersten Positionsdaten und der der zweiten Positionsdaten entsprechend als obere Bits und untere Bits zu erhalten.

12. Kodierer gemäß einem der Ansprüche 1 bis 11, wobei die Vielzahl von Arten von Markierungen entsprechend einer Vielzahl von quantisierten Werten, die mit der Quantisierung durch den Signalprozessor verknüpft sind, entspricht.

13. Kodierer gemäß einem Ansprüche 1 bis 12, wobei der Kodierer als ein Drehgeber konfiguriert ist.

14. Verfahren des Erhaltens einer Absolutposition unter Verwendung einer Skala (SCL), in der eine Vielzahl von Markierungen, die eine Vielzahl von Arten von Markierungen umfasst, in einer Spur angeordnet sind, mit einem Zwischenraum und bei einer Periode, wobei das Verfahren die Schritte aufweist:
Erfassen von Markierungen der Vielzahl von Markierungen durch eine Vielzahl von Elementen eines Detektors (PDA), die entlang einer Richtung entsprechend der Spur angeordnet sind; und
Erhalten einer Absolutposition der Skala basierend auf einer Ausgabe des Detektors,
wobei der Schritt des Erhaltens den Schritt aufweist
Erzeugen einer Datensequenz, die durch eine Vielzahl von Daten gebildet ist, durch entsprechendes Quantisieren einer Vielzahl von Signalen, die entsprechend einer Vielzahl der Periode entsprechen, die von dem Detektor ausgegeben wird, und um erste Positionsdaten mit einer Auflösung der Periode basierend auf der erzeugten Datensequenz zu erhalten,
Erhalten von zweiten Positionsdaten mit einer Auflösung, die höher ist als die Auflösung der Periode, basierend auf einer Phase eines Signals, entsprechend zumindest einer der Periode der Vielzahl von Signalen, und
Erhalten der Absolutposition basierend auf den ersten Positionsdaten und den zweiten Positionsdaten.

## Revendications

1. Codeur absolu comprenant :
une échelle (SCL) dans laquelle une pluralité de marques, incluant une pluralité de types de marques, sont disposées dans une piste, avec un espace et à une période ;
un détecteur (PDA) incluant une pluralité d'éléments disposés le long d'une direction correspondant à la piste, et configuré pour détecter des marques de la pluralité de marques par la pluralité d'éléments ; et
un processeur de signal (CULC) configuré pour obtenir une position absolue de ladite échelle sur la base d'une sortie dudit détecteur,
dans lequel ledit processeur de signal est configuré
pour générer une séquence de données constituée d'une pluralité de données en quantifiant respectivement une pluralité de signaux, correspondant respectivement à une pluralité de la période, sortie dudit détecteur, et pour obtenir des premières données de position avec une résolution de la période sur la base de la séquence de données générée,
pour obtenir des secondes données de position avec une résolution supérieure à la résolution de la période sur la base d'une phase d'un signal, correspondant à au moins une de la période, de la pluralité de signaux, et
pour obtenir la position absolue sur la base des premières données de position et des secondes données de position.

2. Codeur selon la revendication 1, dans lequel la pluralité de marques inclut au moins deux types de marques qui ont des transmittances respectives différentes, et le détecteur est configuré pour détecter une lumière transmise à travers l'échelle.

3. Codeur selon la revendication 2, dans lequel chacun des au moins deux types de marques a une transmittance uniforme dans celles-ci.

4. Codeur selon la revendication 2, dans lequel chacun des au moins deux types de marques a une transmittance qui change avec une position dans celles-ci.

5. Codeur selon la revendication 1, dans lequel la pluralité de marques inclut au moins deux types de marques qui ont des réflectances respectives différentes, et le détecteur est configuré pour détecter une lumière réfléchie par l'échelle.

6. Codeur selon la revendication 1, dans lequel la pluralité de marques inclut au moins deux types de marques qui ont des longueurs respectives différentes dans une direction perpendiculaire à une direction dans laquelle la pluralité de marques sont disposées, et le détecteur est configuré pour détecter une lumière transmise à travers l'échelle.

7. Codeur selon la revendication 1, dans lequel la pluralité de marques inclut au moins deux types de marques qui ont des longueurs respectives différentes dans une direction perpendiculaire à une direction dans laquelle la pluralité de marques sont disposées, et le détecteur est configuré pour détecter une lumière réfléchie par l'échelle.

8. Codeur selon l'une quelconque des revendications 1 à 7, dans lequel ledit processeur de signal est configuré pour lisser la pluralité de signaux, et pour quantifier la pluralité de signaux lissée pour générer la séquence de données.

9. Codeur selon l'une quelconque des revendications 1 à 8, dans lequel ledit processeur de signal est configuré pour normaliser des amplitudes de la pluralité de signaux, et pour obtenir la phase sur la base de la pluralité de signaux normalisée.

10. Codeur selon la revendication 9, dans lequel ledit processeur de signal est configuré pour normaliser les amplitudes sur la base de la séquence de données générée.

11. Codeur selon l'une quelconque des revendications 1 à 10, dans lequel le processeur de signal est configuré pour obtenir la position absolue en combinant les premières données de position et les secondes données de position respectivement comme des bits supérieurs et des bits inférieurs.

12. Codeur selon l'une quelconque des revendications 1 à 11, dans lequel la pluralité de types de marques correspond respectivement à une pluralité de valeurs quantifiées associées à la quantification par le processeur de signal.

13. Codeur selon l'une quelconque des revendications 1 à 12, dans lequel le codeur est configuré comme un codeur rotatif.

14. Procédé d'obtention d'une valeur absolue en utilisant une échelle (SCL) dans laquelle une pluralité de marques, incluant une pluralité de types de marques, sont disposées dans une piste, avec un espace et à une période, le procédé comprenant des étapes consistant à :
détecter des marques de la pluralité de marques par une pluralité d'éléments d'un détecteur (PDA) agencé le long d'une direction correspondant à la piste ; et
obtenir une position absolue de ladite échelle sur la base d'une sortie dudit détecteur,
dans lequel ladite étape d'obtention inclut une étape consistant à
générer une séquence de données constituée d'une pluralité de données en quantifiant respectivement une pluralité de signaux, correspondant respectivement à une pluralité de la période, sortie dudit détecteur, et pour obtenir des premières données de position avec une résolution de la période sur la base de la séquence de données générée,
obtenir des secondes données de position avec une résolution supérieure à la résolution de la période sur la base d'une phase d'un signal, correspondant à au moins une de la période, de la pluralité de signaux, et
obtenir la position absolue sur la base des premières données de position et des secondes données de position.
